# EUROPEAN PATENT APPLICATION

(11) **EP 4 765 530 A1**
(43) Date of publication of application: **24.06.2026**
(21) Application number: 25221247.7
(22) Date of filing: 05.12.2025
(51) Int. Cl.: H02G 5/02, H02G 5/10

(54) **BUSBAR MOUNTING**

(30) Priority: 23.12.2024 GB 202418960
(71) Applicant: Fortescue Zero Limited, Kidlington, England OX5 1GB (GB)
(72) Inventor: RIDLEY, Ewan, Oxford OX5 1GB (GB); MATCHAM, Benn, Oxford OX5 1GB (GB)
(74) Representative: HGF

(57) **Abstract**

Disclosed is a busbar spacer (23) comprising a first busbar passage liner (31) having a first spacer passage (37) therethrough. The first busbar passage liner (31) is arranged to be provided within a first busbar passage (19) through a first busbar (7), to thereby electrically insulate from a wall of the first busbar passage (19) a shank (87) of a connector (89). The shank (87) of the connector (89) is arranged to pass through the first busbar passage liner (31) to secure the first busbar (7) to a mounting point (3).

## Description

### TECHNICAL FIELD

The present disclosure relates to busbar mountings. Aspects of the invention relate to a busbar spacer and to a busbar system. The invention may have particular application for use in power distribution units, e.g. for making one or more connections to batteries. In such a context, busbars used may for instance be 10mm or 20mm thickness busbars e.g. for delivery of 700V, 1500V or 1800V as appropriate. As will be appreciated however, these are non-limiting example applications only.

### BACKGROUND

Support and electrical insulation systems for mounting/securing busbars to framework members are known. However, existing systems tend to be compromised in at least one of several ways. For instance, some existing systems are compromised in terms of their capacity for thermal regulation of the busbar(s), potentially necessitating busbars types of increased cost and/or weight (e.g. where large electrical insulation sheets are provided directly adjacent/between the busbars in order to provide electrical insulation). Some existing systems are compromised in terms of strength/robustness and therefore load bearing capacity in terms of the busbars they can mount and/or mounting arrangements for those busbars (e.g. where multiple conductive connectors are used that are joined by electrically insulating plastic parts in order to provide electrical insulation). Some existing systems are compromised in terms of packaging efficiency (e.g. where only a single busbar can be mounted at a given mounting point).

It is an aim of the present invention to address one or more of the disadvantages associated with the prior art.

### SUMMARY OF THE INVENTION

According to a first aspect of the invention there is provided a busbar spacer optionally comprising a first busbar passage liner optionally having a first spacer passage therethrough, the first busbar passage liner optionally being arranged to be provided within a first busbar passage through a first busbar, to optionally thereby electrically insulate from a wall of the first busbar passage a shank of a connector optionally arranged to pass through the first busbar passage liner optionally to secure the first busbar optionally to a mounting point.

With the first busbar passage liner being provided between the connector and the first busbar in use, the busbar spacer may at least contribute to complete electrical insulation between the connector and first busbar. It may be advantageous, e.g. for strength reasons, for the connector to be formed from a material that is electrically conductive. Nonetheless, it may also be desirable/necessary that such a connector is electrically insulated from the first busbar, in order that it and the mounting point do not become live and/or become a short-circuit path.

The busbar spacer may assist in locating and/or supporting the first busbar relative to the mounting point and/or the connector.

It may be that the connector is used to secure/support multiple busbars. Such busbars may need to be electrically insulated from one another (e.g. because they are of different polarity and/or voltage and/or because they are used to power distinct systems). The use of a single, electrically conducting connector to mount the multiple busbars might therefore in principle be problematic. However, where, as here, the busbar spacer provides electrical insulation between the first busbar (and potentially indeed other busbars) and the connector, the single connector may be safely used.

The use of the busbar spacer may be preferable to alternative options. For instance, it may negate the need for an electrical insulation coating, which may be difficult to apply, may be unreliable and/or may inhibit heat dissipation. By way of further example, it may allow for the first busbar (and potentially indeed other busbars) to suspended in free air (at least to a greater degree). This may be contrasted with the use of electrically insulating panels between the busbars, which may inhibit heat dissipation. Still further, the busbar spacer may allow for closer safe mounting of busbars (reducing footprint requirement) and more efficient mounting (i.e. requiring only one connector and mounting point).

The first spacer passage and/or the first busbar passage may be cylindrical throughbores. The first spacer passage and/or the first busbar passage and/or the first busbar passage liner may be considered to extend axially in use. The first spacer passage and/or the first busbar passage and/or the first busbar passage liner may be coaxially arranged in use.

In some embodiments the busbar spacer comprises a clamping portion arranged to be provided between a clamping face of the first busbar and a head of the connector, to thereby electrically insulate the head of the connector from the clamping face of the first busbar with the connector securing the first busbar to the mounting point.

The clamping face of the first busbar may for instance face at least substantially away from the mounting point and/or may be considered to extend substantially in the radial direction (i.e. substantially perpendicularly to the longitudinal direction of the first busbar passage).

The clamping portion may extend beyond the extent of the first busbar passage e.g. its cross-sectional/radial extent may be greater than that of the first busbar passage.

The head of the connector may in use engage the clamping face, through the clamping portion of the busbar spacer, to apply a compressive force to secure the first busbar to the mounting point.

The clamping portion may extend from or proximate to an end of and/or be integrally formed with the first busbar passage liner.

In some embodiments, the busbar spacer has one or more surface convolutions that increase an electrically insulating path length between the connector and the first busbar.

In some embodiments the busbar spacer is formed in at least two parts.

The busbar spacer being formed in at least two parts may better facilitate its locating with respect to the other elements of a busbar system and/or the assembly of such a busbar system.

The busbar spacer being formed in at least two parts may allow for it to be provided with particular form/arrangement in order to perform particular functions e.g. lengthening a creepage path if a short circuit is to occur and/or providing support and/or spacing e.g. to busbars.

In some embodiments at least one of the parts has surface convolutions that increase an electrically insulating path length between the connector and the first busbar and/or at least two of the parts form at least one convoluted interface between them that increase an electrically insulating path length between the connector and the first busbar.

The convolutions/convoluted interface may increase the length of shortest creepage path/path length (shortest path across the surface of an electrically insulating material over which arcing could occur). This may increase resistance to arcing across the busbar spacer between the first busbar and the connector, which might otherwise be more likely where, for instance, surface contamination is present.

The convolutions may be provided by undulations and/or serpentine paths in or between surfaces. Such features may also serve an engagement/support function when engaging/interlocking features e.g. different parts of the busbar spacer. One or more of the convolutions may for instance be formed by undulating concentric rings. At least one convoluted interface may be formed by the engagement of male and female portions of at least two of the parts.

In some embodiments at least two of the parts are arranged to cooperatively engage with each other.

In this way, despite being formed by multiple parts, the busbar spacer may be more secure/robust than it would otherwise be when the parts are configured as a single unit. The cooperative engagements may for instance provide support in one or more directions to one or more of the engaged parts and/or to one or more other features which contact one or more of the parts. Additionally or alternatively, the engagement may provide or assist with securing one of the parts to another and/or desired positioning/alignment of the parts.

The cooperative engagement may for instanced be facilitated by suitable formations on one or more of the parts e.g. male and female portions or complimentary/interlocking surface formations e.g. ribs, undulations or castellations.

A portion of the busbar spacer (e.g. the first busbar passage liner) may be formed by portions of the different parts and/or may be secured/supported by the cooperative engagement.

In some of the embodiments two of the parts are arranged to form the first busbar passage liner, each having first busbar passage liner portions and the two parts being arranged to have their respective first busbar passage liner portions inserted into the first busbar passage from opposite ends of the first busbar passage.

This arrangement may facilitate the provision of the first busbar passage liner whilst preserving design freedom in terms of other features of the busbar spacer. For instance, it may be desired for the busbar spacer to have features that are larger (e.g. radially larger) than the first busbar passage to either side of the first busbar. Such features may for instance provide the clamping portion discussed above and/or a similar electrically insulating body to the other side of the first busbar. Additionally or alternatively, such features may provide spacing and/or support between busbars.

In some embodiments the first busbar passage liner portions of the two parts are respectively male and female first busbar passage liner portions, arranged so that the male first busbar liner portion is inside the female first busbar passage liner portion when both are fully inserted into the first busbar passage from the opposite ends of the first busbar passage.

This arrangement may naturally provide a convoluted interface between the two parts and may be conducive to generating at least a relatively high degree of interlocking strength between the two parts. The arrangement may allow for the formation of the first busbar passage liner and design freedom in terms of busbar spacer features either side of the first busbar.

In some embodiments one of the two parts has the clamping portion integrally formed with and extending from its first busbar passage liner portion.

In some embodiments the other of the two parts may have a locating flange integrally formed with and extending from its first busbar passage liner portion, the locating flange being arranged to abut the first busbar when the other of the two parts has its first busbar passage liner portion fully inserted into the first busbar passage.

The locating flange may provide electrically insulating separation from the first busbar and/or may provide support to the first busbar.

The locating flange may extend beyond the extent of the first busbar passage e.g. its cross-sectional/radial extent may be greater than that of the first busbar passage.

In some embodiments the busbar spacer comprises a second busbar passage liner having a second spacer passage therethrough, the second busbar passage liner being arranged to be provided within a second busbar passage through a second busbar and to thereby electrically insulate from a wall of the second busbar passage the shank of the connector arranged to pass through the first busbar passage liner and the second busbar passage liner to secure the first and second busbars to the mounting point.

This arrangement may allow for a single common fixing to secure and be electrically insulated from two busbars (which might for instance be positive and negative busbars).

This arrangement may be repeated e.g. for more than two busbars, allowing for the stacked securing of more than two busbars by the connector and mounting point.

Anything discussed previously in respect of the first busbar and/or parts of the busbar spacer relevant to the first busbar should be considered to optionally apply mutatis mutandis to the second busbar and/or further busbars (e.g. surface convolutions and/or convoluted interfaces).

In some embodiments the busbar spacer comprises an intermediate part having a first busbar passage liner portion arranged to contribute to the formation of the first busbar passage liner and a second busbar passage liner portion arranged to contribute to the formation of the second busbar passage liner.

The first and second busbars may be adjacent among the busbars provided.

The intermediate part may provide male portions of both the first busbar passage liner and the second busbar passage liner. These may be arranged to be respectively engaged with female portions provided by other parts of the busbar spacer, the female portions being inserted from opposite sides of the first and second busbars respectively to the sides of those busbars from which the intermediate part is inserted.

In some embodiments the intermediate part has a projection portion extending substantially perpendicularly to the first and second busbar passage liner portions from an interface portion of the intermediate part between the first and second busbar passage liner portions, the projection portion thereby extending into a region between the first and second busbars.

The projection may therefore extend between ends of the liner portions of other parts of the busbar spacer.

The projection may extend in a direction substantially parallel to each of the first and second busbars.

The projection may therefore provide an electrically insulating barrier between the first and second busbars. Indeed, the projection may extend sufficiently in order to provide a full (e.g. line of sight) electrically insulating screen between the first and second busbars.

Nonetheless, the projection may be spaced from one or both of the first and second busbars, thereby permitting heat to be dissipated from the relevant busbar(s) more readily to surrounding air.

In some embodiments the intermediate part comprises one or more spacing buffers extending from the projection portion towards the first busbar and/or one or more spacing buffers extending from the projection portion towards the second busbar.

Each spacing buffer may contact the respective busbar towards which it extends.

The spacing buffers may set the spacing between the first and second busbars and/or may support the first and second busbars.

The projection and spacing buffers may together have a '+' or cruciform form.

In some embodiments at least two of the parts form a common sub-unit which is repeatable in the busbar spacer.

The sub-units may indeed be repeated in the busbar spacer. The sub-units may be considered modular. They may be used to extend the busbar spacer. The sub-unit feature may make assembly of a busbar system more convenient/possible. It may in particular, facilitate securing, and optionally electrically isolating, a second and optionally further busbars, optionally using the same connector. Each sub-unit may accommodate the clamping and electrical insulation of one or more (e.g. two) additional busbars.

In some embodiments the common sub-unit is arranged to cooperatively engage at least one further instance of the common sub-unit.

The sub-units may have surface features arranged to allow engagement of one sub-unit to another e.g. end to end. The surface features may for instance be formed by surface convolutions as previously discussed.

According to a second aspect of the invention there is provided a conductor spacer optionally comprising a first conductor passage liner optionally having a first spacer passage therethrough, the first conductor passage liner optionally being arranged to be provided within a first conductor passage through a first conductor, to optionally thereby electrically insulate from a wall of the first conductor passage a shank of a connector optionally arranged to pass through the first conductor passage liner optionally to secure the first conductor optionally to a mounting point.

Whilst above and further below, the disclosure is provided in the context of a busbar spacer for use with busbars and/or a busbar system, it is noted that the technology discussed could equally be applied to a conductor of any other type. Consequently, it is hereby envisaged that all discussion within this document concerning busbar based systems can also be applied mutatis mutandis to a conductor. For instance, any recitation herein of the word busbar, can be replaced with the word conductor mutatis mutandis.

According to a third aspect there is provided a busbar system comprising the busbar spacer of the first or the second aspect.

In some embodiments the passage liner is provided within the first busbar passage.

The system may also comprise the second and optionally additional busbars.

In some embodiments the busbar system comprises the mounting point.

In some embodiments the busbar system comprises at least part of the connector passing through the first liner passage and securing the first busbar to the mounting point.

The connector may for instance comprise a fixing or fastener. The connector may for instance comprise a bolt and may comprise a nut. The connector may be formed from an electrically conductive material.

In some embodiments the busbar system comprises an isolation plate disposed between the mounting point and the first busbar.

The isolation plate may additionally or alternatively be between the locating flange and the mounting point. The isolation plate may provide electrical insulation. The isolation plate may have surface formations to cooperatively engage with the busbar spacer e.g. convolutions on a top surface of the locating flange.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
**Figure 1** shows a perspective view of a busbar system according to an embodiment of the invention;
**Figure 2** shows a perspective view with a cross-sectional slice of the busbar system of Figure 1;
**Figure 3** shows a close-up of part of Figure 2;
**Figure 4** shows a cross-sectional view of a part of the busbar system of Figure 1 according to an embodiment of the invention;
**Figure 5** shows a cross-sectional view of a busbar system according to an embodiment of the invention; and
**Figure 6** shows a cross-sectional view of a busbar system according to an embodiment of the invention;

### DETAILED DESCRIPTION

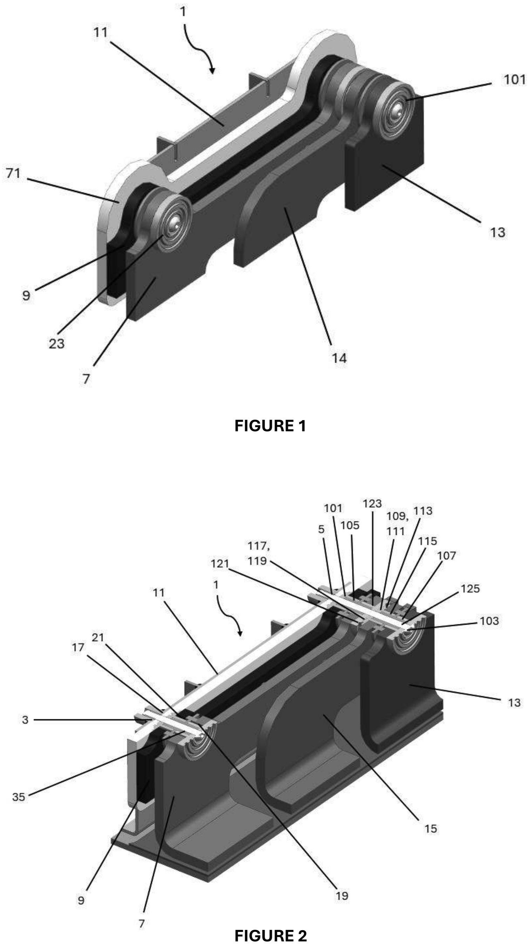

Referring first to Figures 1-4, a busbar system is generally shown at 1. In this case, the busbar system has a first mounting point 3 and a second mounting point 5, though in other embodiments more or less mounting points may be provided. The first mounting point 3 is used to mount and secure a first busbar 7 and a second busbar 9 (both positive in polarity) to a framework member 11. Meanwhile, the second mounting point 5 is used to mount and secure the first busbar 7, the second busbar 9, a third busbar 13 and a fourth busbar 15 to the framework member 11 (the third 13 and fourth 15 busbars being negative in polarity). As will be appreciated, in different embodiments, different arrangements are possible e.g. each mounting point 3, 5 may be used to mount and secure fewer or more busbars and/or busbars that are unique to or shared between them in terms of mounting and securing.

Below, the mounting and securing associated with the first mounting point 3 is considered first. The first mounting point 3 is formed by a mounting point throughbore 17 through the framework member 11. The first busbar 7 has a first busbar passage 19 and the second busbar 9 has a second busbar passage 21. The first 19 and second 21 busbar passages are throughbores. The mounting point throughbore 17, first busbar passage 19 and second busbar passage 21 are cylindrical and are arranged to be aligned (coaxial) when the busbar system 1 is fully assembled. When the busbar system 1 is fully assembled, the first 7 and second 9 busbars are arranged in an adjacent, stacked but separated manner.

A first busbar spacer 23 is associated with the first mounting point 3. The first busbar spacer is formed from an electrically insulating material and the material used is, in this embodiment, consistent throughout the first busbar spacer 23. The first busbar spacer 23 is formed in three discrete pieces that are connectable/engageable with each other: a first part 25, an intermediate part 27 and a second part 29. The first busbar spacer 23 forms a first busbar passage liner 31 and a second busbar passage liner 33. The first 31 and second 33 busbar passage liners are each cylindrical and are arranged to fit inside and line the first busbar passage 19 and second busbar passage 21 respectively. Passing through the first busbar spacer 23 is a cylindrical throughbore 35 which comprises a first spacer passage 37 through the first busbar passage liner 31 and a second spacer passage 39 through the second busbar passage liner 33. The first 37 and second 39 spacer passages may be considered to be axially arranged and coaxial with the first 19 and second 21 busbar passages when the busbar system 1 is fully assembled. The first 37 and second 39 spacer passages communicate via the cylindrical throughbore 35 and have the same diameter. Indeed, a consistent diameter is provided throughout the cylindrical throughbore 35.

The second part 29 has a head or plate like locating flange 41 extending, in use, in a radial direction and beyond the diameter of the second busbar passage 21. The second part 29 also has a second busbar passage liner portion 43 of the second part 29 projecting perpendicularly from one side of the locating flange 41 (i.e. extending axially in use).

The intermediate part 27 has first 45 and second 47 busbar passage liner portions of the intermediate part 27 forming a cylinder. Extending radially outward from an interface portion 49 between the first 45 and second 47 busbar passage liner portions of the intermediate part 27 is a projection portion 51 which has an annular shape. Spaced from the first busbar passage liner portion 45 of the intermediate part 27 and extending perpendicularly from one side of the projection portion 51 is a spacing buffer 53 (i.e. extending axially in use). A similar spacing buffer 53 is spaced from the second busbar passage liner portion 47 of the intermediate part 27 and extends perpendicularly from the other side of the projection portion 51 (i.e. extending axially in use). Each spacing buffer 53 has an annular shape.

The first part 25 has a head or plate like clamping portion 55 extending, in use, in a radial direction and beyond the diameter of the first busbar passage 19. The first part 25 also has a first busbar passage liner portion 57 of the first part 25 projecting perpendicularly from one side of the clamping portion 55 (i.e. extending axially in use).

During assembly, the second busbar passage liner portion 43 of the second part 29 is inserted, from a first side 59 of the second busbar 9, into the second busbar passage 21, until an underside 61 of the locating flange 41 seats against the second busbar 9. The fit between the second busbar passage liner portion 43 of the second part 29 and the second busbar passage 21 is a close fit. From a second side 63 of the second busbar 9, the second busbar passage liner portion 47 of the intermediate part 27 is inserted into the second busbar passage 21, until the relevant spacing buffer 53 seats against the second busbar 9. The respective diameters of the second busbar passage liner portion 43 of the second part 29 and the second busbar passage liner portion 47 of the intermediate part 27 are such that the latter is pushed inside the former in a male and female cooperating close fit. Consequently, the second busbar passage liner portion 43 of the second part 29 and the second busbar passage liner portion 47 of the intermediate part 27 engage one another as part of the assembly process and together they form the second busbar passage liner 33. The lengths (i.e. axial extents) of the second busbar passage liner portion 43 of the second part 29 and the second busbar passage liner portion 47 of the intermediate part 27 are such that a tip of the latter at least substantially reaches the locating flange 41 and a tip of the former at least substantially reaches the projection portion 51.

During assembly, the first busbar passage liner portion 45 of the intermediate part 27 is inserted, from a first side 65 of the first busbar 7, into the first busbar passage 19, until the relevant spacing buffer 53 seats against the first busbar 7. From a second side 67 of the first busbar 7, the first passage liner portion 57 of the first part 25 is inserted into the first busbar passage 19, until an underside 69 of the clamping portion 55 seats against the first busbar 7 (in this case against a clamping face 70 of the first busbar 7). The fit between the first busbar passage liner portion 57 of the first part 25 and the first busbar passage 19 is a close fit. The respective diameters of the first busbar passage liner portion 57 of the first part 25 and the first busbar passage liner portion 45 of the intermediate part 27 are such that the latter is pushed inside the former in a male and female cooperating close fit. Consequently, the first busbar passage liner portion 57 of the first part 25 and the first busbar passage liner portion 45 of the intermediate part 27 engage one another as part of the assembly process and together they form the first busbar passage liner 31. The lengths (i.e. axial extents) of the first busbar passage liner portion 57 of the first part 25 and the first busbar passage liner portion 45 of the intermediate part 27 are such that a tip of the latter at least substantially reaches the clamping portion 55 and a tip of the former at least substantially reaches the projection portion 51.

During assembly, an isolation plate 71 is provided between the first side 59 of the second busbar 9 and the framework member 11. The isolation plate 71 is made of an electrically insulating material and provides an electrically insulating barrier between the framework member 11 and both the second busbar 9 and the locating flange 41 of the second part 29. The isolation plate 71 has an isolation plate passage 73 which is a cylindrical throughbore aligned (coaxial) with the mounting point throughbore 17 and first 19 and second 21 busbar passages when the busbar system 1 is fully assembled. The isolation plate 71 has a first surface 75 facing the framework member 11 when the busbar system 1 is fully assembled and a second surface 77 facing the second busbar 9 when the busbar system 1 is fully assembled. Surrounding the isolation plate passage 73 is a depression 79 in the second surface 77. The depression 79 is arranged to substantially entirely accommodate the locating flange 41 where elsewhere the second surface 77 abuts the first side 59 of the second busbar 9. In addition, the depression 79 is formed with a series of annular, concentric isolation plate castellations 81 arranged to cooperatively intermesh with a corresponding series of annular, concentric locating flange castellations 83 provided on a top surface 85 of the locating flange 41.

During assembly, a threaded shank 87 of a first connector 89, in this case a bolt, is inserted into and passed through the cylindrical throughbore 35 through the first busbar spacer 23, from the clamping face 70 side of the first busbar 7. It consequently passes through the first busbar 7 via the first spacer passage 37 and the second busbar 9 via the second spacer passage 39. It also passes through the isolation plate 71 via the isolation plate passage 73 and through the framework member 11 via the mounting point throughbore 17. When the shank 87 is fully inserted, an underside of a head 91 of the connector 89 abuts the clamping portion 55. A nut 91 is applied to the end of the shank 87 protruding through the framework member 11, and torqued to thereby attach the first 7 and second 9 busbars, as well as the isolation plate and first busbar spacer 23 to the framework member 11 at the mounting point 3. The tightening may ensure that the first 7 and second 9 busbars (and indeed the isolation plate 71) are secured so as to be maintained parallel to one another i.e. with the first busbar 7 being substantially rigidly held between the clamping portion 55 and the opposing spacing buffer 53, the second busbar 9 being substantially rigidly held between the isolation plate 71 and the opposing spacing buffer 53 and the isolation plate being substantially rigidly held between the second busbar 9 and the framework member 11. As will be appreciated in this regard, the projection portion 51 extends into a region between the first 7 and second 9 busbars and each spacing buffer 53 extends from the projection portion 51 towards the first busbar 7 and towards the second busbar 9 respectively. The spacing buffers 53 therefore set the spacing between and clamp the first 7 and second 9 busbars.

When fully assembled, the parts of the mounting system 1 associated with the first mounting point 3 (as described above) may allow for a single common fixing (i.e. the first connector 89) to secure and be electrically insulated from the first 7 and second 9 busbars. The securing of multiple busbars in this way may be efficient e.g. requiring fewer mounting points. In this case, the first connector 89 is a single piece and is formed from an electrically conductive metal. This gives the first connector 89 desired levels of strength, but means that it in principle, it could become live, potentially therefore carrying current to the framework member 11 and/or presenting a short circuit risk, unless it is adequately electrically insulated from the first 7 and second 9 busbars. The first busbar spacer 23 provides the necessary electrical insulation, without requiring a more complicated and potentially weaker multi-part connector. First, as will be appreciated, the first busbar passage liner 31 provides direct electrical insulation between the shank 87 of the first connector 89 and a wall of the first busbar passage 19 and the second busbar passage liner 33 provides direct electrical insulation between the shank 87 of the first connector 89 and a wall of the second busbar passage 21. The head 91 of the first connector 89 is meanwhile electrically insulated from the first busbar 7 by the clamping portion 55. The first 7 and second 9 busbars are electrically insulated from each other by an air gap 93 maintained by the spacing buffers 53 as well as by the projection portion 51 and spacing buffers 53 themselves. The air gap 93 may advantageously also allow improved heat dissipation from the first 7 and second 9 busbars and surrounding architecture. The framework member 11 is electrically insulated from the second busbar 9 by the isolation plate.

The effectiveness of the electrical insulation is enhanced by the creation of meandering paths that would need to be bridged in order to render the electrical insulation ineffective. This may increase the resistance to arcing and/or the formation of other short-circuit paths which might for instance be caused by surface contamination. For instance, the male and female fit between the first part 25 and intermediate part 27 and between the second part 29 and intermediate part 27 naturally create convoluted paths (i.e. increased path length) between the first connector 89 and the first 7 and second 9 busbars respectively. Additionally, the radial extent of the locating flange 41 as well as the annular concentric locating flange castellations 83 provide another meandering path between the second busbar 9 and the first connector 89, as well as providing locating and support for the second busbar 9. The radial extent of the clamping portion 55, together with annular concentric castellations 95 on its top surface 97 (facing away from the first busbar 7) provide another meandering path between the first busbar 7 and the first connector 89. Still further, the combination of the projection portion 51 and spacing buffers 53, especially given the radial projection of the projection portion 51 extending beyond the radial position of the spacing buffers 53, provide a further meandering path between the first 7 and second 9 busbars as well as between the first connector 89 and each of the first 7 and second 9 busbars.

In addition, the multi-part design of the first busbar spacer and the arrangement being such that different of its parts are inserted from different sides of the busbars 7, 9, may allow for features with radial extents beyond that of the passages in the busbars 7, 9, to be provided in locations where this would not otherwise be possible (at least in combination). This in turn may, as here, allow for longer, more meandering path lengths to enhance electrical insulation reliability as well as enhanced options for supporting features of the mounting system 1.

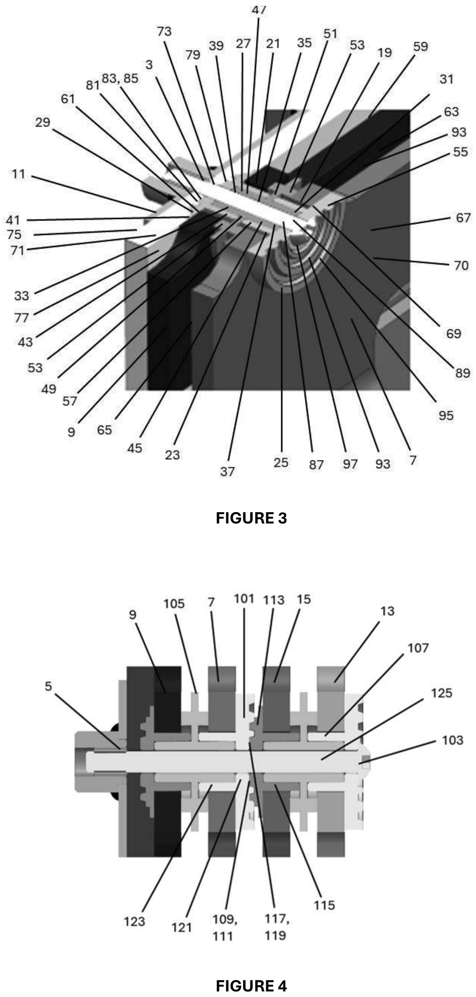

Figure 4 shows a cross-section of the mounting and securing associated with the second mounting point 5. The mounting and securing associated with the second mounting point is identical to that associated with the mounting point 3, except for adaptations to provide for the additional mounting and securing of the third 13 and fourth 15 busbars. Consequently, mounting and securing of the first 7 and second 9 busbars at the second mounting point 5 is not further discussed in detail and it should be understood that all previous discussion concerning mounting point 3 also applies with respect to mounting point 5 mutatis mutandis. The mounting and securing associated with the second mounting point 5 does however demonstrate the way in which busbar spacers as disclosed herein can incorporate common sub-units, (e.g. of the form of the first busbar spacer 23) which can be repeated in order to secure one or more additional busbars.

The mounting and securing associated with the second mounting point 5 utilises a second busbar spacer 101 which is extended by comparison with the first busbar spacer 23 and a second connector 103 which has a lengthened shank by comparison with the first connector 89. The second busbar spacer 101 equates to two instances of busbar spacers of the form of the first busbar spacer 23, arranged in series (i.e. end-to-end). A first 105 of these instances is used in the securing and electrical insulating of the first 7 and second 9 busbars, whilst a second 107 of these instances is used in the securing and electrical insulating of the third 13 and fourth 15 busbars. Annular concentric locating flange castellations 109 on a top surface 111 of a locating flange 113 of a second part 115 of the second instance 107, cooperatively intermesh with a corresponding series of annular concentric castellations 117 provided on a top surface 119 of a clamping portion 121 of a first part 123 of the first instance 105. This approach could be repeated further times as required. As will be appreciated therefore, each of the first 105 and second 107 instances represents a common, repeatable and inter-engageable sub-unit. As will be appreciated, in other embodiments, the sub-units may be repeated more than once (e.g. in order to be used in the securing and electrical insulating of more than four busbars). A shank 125 of the second connector 103 passes through both the first 105 and second 107 instances (i.e. the whole second busbar spacer 101). The manner in which the second 107 of these instances is used in the securing and electrically insulating of the third 13 and fourth 15 busbars is the same as the way in which the first busbar spacer 23 is used in securing and electrically insulating the first 7 and second 9 busbars and so is not repeated here.

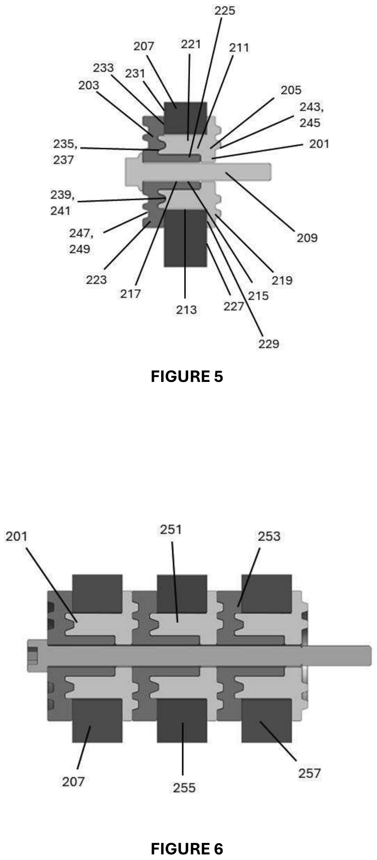

Turning to Figure 5, an alternative form of busbar spacer (third busbar spacer 201) is shown. The third busbar spacer 201 is largely similar to the first 23 and second 101 busbar spacers and would function in a similar manner to secure and electrically insulate one or more busbars. However, in this case, a repeatable and inter-engageable sub-unit is provided in a first part 203 and a second part 205 only. There is not therefore an intermediate part.

In Figure 5, a first busbar 207 and a bolt 209 of a connector is shown. The bolt 209 would be used to secure the first busbar 207 to a framework member in a similar manner to that described above.

The third busbar spacer 201 is formed from an electrically insulating material and the material used is, in this embodiment, consistent throughout the third busbar spacer 201. The third busbar spacer 201 is formed in two discrete pieces that are connectable/engageable with each other: the first part 203 and the second part 205. The third busbar spacer 201 forms a first busbar passage liner 211. The first busbar passage liner 211 is cylindrical and is arranged to fit inside and line a first busbar passage 213 of the first busbar 207. Passing through the third busbar spacer 201 is a cylindrical throughbore 215, which comprises a first spacer passage 217 through the first busbar passage liner 211. The first spacer passage 217 may be considered to be axially arranged and coaxial with the first busbar passage 213 when the busbar system 1 is fully assembled. A consistent diameter is provided throughout the cylindrical throughbore 215.

The second part 205 has a head or plate like locating flange 219 extending, in use, in a radial direction and beyond the diameter of the first busbar passage 213. The second part 205 also has a first busbar passage liner portion 221 of the second part 205 projecting perpendicularly from one side of the locating flange 219 (axially in use).

The first part 203 has a head or plate like clamping portion 223 extending, in use, in a radial direction and beyond the diameter of the first busbar passage 213. The first part 203 also has a first busbar passage liner portion 225 of the first part 203 projecting perpendicularly from one side of the clamping portion 223 (axially in use).

During assembly, the first busbar passage liner portion 221 of the second part 205 is inserted, from a first side 227 of the first busbar 207, into the first busbar passage 213, until an underside 229 of the locating flange 219 seats against the first busbar 207. The fit between the first busbar passage liner portion 221 of the second part 205 and the first busbar passage 213 is a close fit. From a second side 231 of the first busbar 207, the first busbar passage liner portion 225 of the first part 203 is inserted into the first busbar passage 213, until an underside 233 of the clamping portion 223 seats against the first busbar 207. The respective diameters of the first busbar passage liner portion 221 of the second part 205 and the first busbar passage liner portion 225 of the first part 203 are such that the latter is pushed inside the former in a male and female cooperating close fit. Consequently, the first busbar passage liner portion 221 of the second part 205 and the first busbar passage liner portion 225 of the first part 203 engage one another as part of an assembly process and together they form the first busbar passage liner 211.

A tip 235 of the first busbar passage liner portion 221 of the second part 205 is provided with annular concentric castellations 237. Further, an inner radial portion 239, of the underside 233 of the clamping portion 223 has annular concentric castellations 241 that are complementary to the annular concentric castellations 237 of the tip 235. Further, the lengths (i.e. axial extents) of the first busbar passage liner portion 221 of the second part 205 and the first busbar passage liner portion 225 of the first part 203 are complementary, such that the annular concentric castellations 237 of the tip 235 intermesh with the annular concentric castellations 241 of the inner radial portion 239, when the first busbar passage liner portion 225 of the first part 203 and the first busbar passage liner portion 221 of the second part 205 are fully inserted into the first busbar passage 213. In addition, a tip of the first busbar passage liner portion 225 of the first part 203 at least substantially reaches the locating flange 219. The complementary annular concentric castellations further increase the path lengths between the bolt 209 and the first busbar 207 over and above the path length contributions made by the male and female fit between the first 203 and second 205 parts.

A top surface 243 of the locating flange 219 is provided with annular concentric castellations 245. These increase a path length between the bolt 209 and the first busbar 207 and may be used to support/locate the locating flange 219 and/or broader system e.g. where complementary castellations are provided in a framework member or an isolation plate. Similarly, a top surface 247 of the clamping portion 223 is provided with annular concentric castellations 249. These also increase the path length between the bolt 209 and the first busbar 207. In addition, the annular concentric castellations 245 of the top surface 243 of the locating flange 219 and the annular concentric castellations 249 of the top surface 247 of the clamping portion 223 are complementary. Consequently, multiple instances of the third busbar spacer 201 can be arranged in series (i.e. end-to-end) with cooperative intermeshing between the top surface 243 of the locating flange 219 of one instance with the top surface 247 of the clamping portion 223 of the next. In this way, multiple busbars may be supported and electrically insulated and each instance of the third busbar spacer considered a common, repeatable and inter-engageable sub-unit. Such an arrangement is shown in Figure 6, where the third busbar spacer 201 is used in combination with a fourth busbar spacer 251 and a fifth busbar spacer 253 to support and electrically insulate the first busbar 207, a second busbar 255 and a third busbar 257. In such arrangements, separation between the busbars may be ensured by the thicknesses (i.e. axial extents) of the relevant locating flange and adjacent clamping portion.

The third busbar spacer 201 of Figures 5 and 6 provides an alternative by comparison with the first busbar spacer 23 of Figures 1-4. The third busbar spacer 201 may be considered a somewhat simpler arrangement i.e. no requirement for an intermediate part. However, the first busbar spacer 201 may offer alternative assembly process approaches and/or manufacturing approaches.

It will be appreciated, that various changes and modifications can be made to the present invention without departing from the scope of the present application.

## Claims

1. A busbar spacer comprising a first busbar passage liner having a first spacer passage therethrough, the first busbar passage liner being arranged to be provided within a first busbar passage through a first busbar, to thereby electrically insulate from a wall of the first busbar passage a shank of a connector arranged to pass through the first busbar passage liner to secure the first busbar to a mounting point.

2. The busbar spacer according to claim 1 comprising a clamping portion arranged to be provided between a clamping face of the first busbar and a head of the connector, to thereby electrically insulate the head of the connector from the clamping face of the first busbar with the connector securing the first busbar to the mounting point.

3. The busbar spacer according to claim 1 or claim 2 formed in at least two parts.

4. The busbar spacer according to claim 3 where at least one of the parts has surface convolutions that increase an electrically insulating path length between the connector and the first busbar and/or at least two of the parts form at least one convoluted interface between them that increase an electrically insulating path length between the connector and the first busbar.

5. The busbar spacer according to claim 3 or claim 4 where at least two of the parts are arranged to cooperatively engage with each other.

6. The busbar spacer according to any of claims 3 to 5 where two of the parts are arranged to form the first busbar passage liner, each having first busbar passage liner portions and the two parts being arranged to have their respective first busbar passage liner portions inserted into the first busbar passage from opposite ends of the first busbar passage.

7. The busbar spacer according to claim 6 where the first busbar passage liner portions of the two parts are respectively male and female first busbar passage liner portions, arranged so that the male first busbar liner portion is inside the female first busbar passage liner portion when both are fully inserted into the first busbar passage from the opposite ends of the first busbar passage.

8. The busbar spacer of claim 7 when dependent through to claim 2 where one of the two parts has the clamping portion integrally formed with and extending from its first busbar passage liner portion.

9. The busbar spacer according to any of claims 3 to 8 comprising a second busbar passage liner having a second spacer passage therethrough, the second busbar passage liner being arranged to be provided within a second busbar passage through a second busbar and to thereby electrically insulate from a wall of the second busbar passage the shank of the connector arranged to pass through the first busbar passage liner and the second busbar passage liner to secure the first and second busbars to the mounting point.

10. The busbar spacer according to claim 9 comprising an intermediate part having a first busbar passage liner portion arranged to contribute to the formation of the first busbar passage liner and a second busbar passage liner portion arranged to contribute to the formation of the second busbar passage liner.

11. The busbar spacer according to claim 10 where the intermediate part has a projection portion extending substantially perpendicularly to the first and second busbar passage liner portions from an interface portion of the intermediate part between the first and second busbar passage liner portions, the projection portion thereby extending into a region between the first and second busbars.

12. The busbar spacer according to claim 11 where the intermediate part comprises one or more spacing buffers extending from the projection portion towards the first busbar and/or one or more spacing buffers extending from the projection portion towards the second busbar.

13. The busbar spacer according to any of claims 3 to 12 where at least two of the parts form a common sub-unit which is repeatable in the busbar spacer.

14. The busbar spacer according to claim 13 where the common sub-unit is arranged to cooperatively engage at least one further instance of the common sub-unit.

15. A busbar system comprising the busbar spacer of any of claims 1 to 14.
